# EUROPEAN PATENT SPECIFICATION

(11) **EP 0 675 848 B1**
(45) Date of publication and mention of the grant of the patent: **04.12.1996**
(21) Application number: 94903215.5
(22) Date of filing: 20.12.1993
(51) Int. Cl.: B66B 9/02

(54) **ELEVATOR MACHINERY INCLUDING FRICTION BRAKE**
AUFZUGSMACHINERIE MIT REIBUNGSBREMSE
MACHINERIE D'ASCENSEUR A UN FREIN A FRICTION

(30) Priority: 18.12.1992 SE 9203827
(43) Date of publication of application: 11.10.1995
(73) Proprietor: EG TECHNOLOGY AB, S-126 57 Hägersten (SE)
(72) Inventor: ERIKSSON-PAX, Rolf, S-126 57 Hägersten (SE); GUSTAFSSON, Gunnar, S-139 00 Värmdö (SE)
(74) Representative: Kierkegaard, Lars-Olov
(86) International application number: SE9301091
(87) International publication number: WO9414695

(56) References cited:
- DE-A- 2 536 235
- SE-B- 388 185
- SE-B- 461 088
- US-A- 5 080 200

## Description

The present invention relates to machinery for a screw drive elevator, comprising a preferably trapezoidal threaded screw and, mounted thereon, a nut provided with a corresponding thread as well as a drive device, said nut bearing a payload and said drive device having a first gear and at least one drive means connecting the first gear to a second gear, which is mounted on the shaft of a drive motor, by means of which the nut or the screw is rotatable depending on the regulation of the motor and depending on a friction brake.

A screw drive elevator of the above described type by rotating, by means of a drive means, either the screw or the nut, whereupon the nut climbs up or down on the screw depending on the rotational direction of the screw or nut. The screw is, as a rule, made of steel, while the nut is usually made of bronze. Under the nut, there is a so-called fall-stop nut as extra insurance, so that the load cannot fall down when the nut has become too worn. The fall-stop nut has driver elements engaging cooperating means on the elevator nut, so that the fall-stop nut follows the movement of the elevator nut. In elevators, where the screw is held stationary, the elevator nut is rotatably mounted via a ball bearing in a housing, which is a mounting for a drive motor and supports the elevator car and the payload. The housing with the drive motor and the elevator car are prevented from rotating by means of rails mounted in the elevator shaft, said rails guiding the car by means of guides fixed to the housing or elevator car.

For safety reasons, and in accordance with official regulations, the elevator, if there is a power failure, must not be able to fall, out of control, to the bottom of the elevator shaft, and therefore the screw and nut in a conventional screw drive elevator have a relatively small lead angle, as a rule no greater than about 6°, so that the screw and nut will be self-braking relative to each other when axially loaded.

At greater lead angles, this effect ceases. With such a small lead angle, the efficiency of the device is correspondingly low, at most about 30%, requiring unnecessarily large amounts of energy, high rpm of the elevator nut and slow movement of the elevator machinery in both directions. It also involves a high slide speed, usually exceeding 2,5 m/s, in the contact surfaces between the screw and the nut, thus generating an unsatisfactorily large amount of frictional heat. The frictional heat leads in turn to a temperature rise in the contact surfaces, which is accumulated in the nut due to its smaller mass in relation to the screw and due to the fact that the nut is continuously heated, while the screw is able to be cooled off as the nut climbs along the same. Frequent operation of the elevator can therefore result in a temperature rise in hundreds of degrees in the nut. Since the longitudinal coefficient of expansion for bronze is approximately 0.02 mm/m/°C or approximately twice that of steel, a temperature rise of 100°C will mean that a 0.1 m long nut will be extended axially by 0.2 mm. Thus a "hot" nut will have its groove flanks in contact with the corresponding flanks of the threads only at the lower end of the nut. This non-uniform loading of the contact surfaces of the nut will subject the threads to excessive wear.

If there is a power failure, the elevator will stop in its current position and can only be returned to an entering or exit position by supplying energy manually or by means of an auxiliary unit, via a special emergency operating device.

The elevator machinery according to the invention has, however, a relatively large lead angle, 20-40°, and thus lacks the self-braking effect between the screw and the nut. This lead angle, however, achieves, with an optimization of material selection and cooperation between the components of the machinery, at least a doubling of the efficiency. Since the elevator machinery no longer spontaneously stops at the position in question when the power supply to the nut is stopped, a special braking device is required which ensures that the elevator machinery will be reliably locked to the screw any time the elevator stops for entry or exit. With the aid of the braking device, it is possible to reliably lower the elevator car, without supplying extra power, to the next floor, so-called emergency lowering. This emergency lowering should be able to be controlled from the elevator car. According to the invention, it is also possible to lower the rpm of the nut from about 1500 rpm, which is common, to about 500 rpm, thus reducing the frictional speed in the contact surfaces, with unchanged lifting speed, to about a third, which in turn results in substantially lower temperature rise, essentially less longitudinal expansion and significantly extended life of the nut.

The purpose of the invention is therefore to provide an elevator machinery of the type described by way of introduction, which makes it possible, while maintaining or improving the margin of safety, to achieve at least a doubling of the efficiency, at the same time as the life of the elevator nut is substantially increased.

This is achieved according to the invention by virtue of the fact that the lead angle of the screw is greater than 10°, that the friction brake comprises first and second brake means, at least one frictional surface and has a disengaging device, that at least one of the brake means is non-rotatably connected to either the screw or the nut, and that the contact pressure necessary for the braking effect on the braking means is generated by the load acting on the elevator machinery. The braking means are displaceable relative to each other against the effect of the load by means of the disengaging device, between two limit positions along the centerline of the screw, said limit positions defining a rest position and a work position for the machinery.

A preferred embodiment of the invention is characterized in that the nut is rotatably suspended in a housing connected to the drive device, said drive device having a first gear surrounding and non-rotatably fixed to the nut, that the first gear is a nut gear and the second gear is a drive gear, and that the first brake means is formed of the nut housing and the second brake means is formed of the nut gear. The load in the rest position is borne by the screw via the housing, a friction fitting, the nut gear and the nut. In the work position, the disengaging device is activated whereby the nut gear is unloaded and a thrust bearing is loaded instead. The load is thereby borne by the screw via the housing, the disengaging device, a bearing sleeve, the thrust bearing and the nut.

One advantageous further development and improvement of the invention is characterized in that the friction brake comprises an annular lateral surface of the nut gear facing the housing, and an opposing annular end surface of the housing. Between these surfaces there is a wear layer and both the surfaces and the wear layer surround the screw concentrically. By means of the load acting on the housing, when the elevator machinery is in its rest position, the frictional surfaces and the wear layer are pressed against each other with the force required for the braking effect. The disengaging device is preferably hydraulically operated and comprises two telescoping annular elements disposed about the center axis of the screw: an annular cylinder and an annular piston enclosing between them an annular chamber which communicates with a hydraulic pump which is operated in response to control signals from a control unit.

An additional embodiment of the invention is possible, by making the friction brake electronically instead of hydraulically disengageable. The disengaging device and the thrust bearing are combined in a bearing clutch comprising two annular magnet elements, an electromagnet and a permanent magnet. Depending on the operation of the electromagnet, the bearing clutch acts as an electromagnetic clutch, whereby the need for a special thrust bearing is eliminated.

Finally, a particularly simple elevator machinery is possible without any sophisticated control system by using a mechanically operated disengaging device and fixing the nut non-rotatable in the elevator car. The screw is thus rotatably mounted in the elevator shaft, and the housing, the drive means and the disengaging device are fixed in the elevator shaft.

The invention will be described in more detail in the following description with reference to the accompanying drawings.
- Figure 1: shows a partially sectioned side view of a preferred embodiment of the elevator machinery with hydraulic disengaging device,
- Figure 2: shows a detailed view of a possible belt monitoring means,
- Figure 3: shows a block circuit diagram of the control system for the elevator machinery,
- Figure 4: shows a similar view to Figure 1 of a variant of the elevator machinery with an electronic disengaging device and an electromechanical thrust bearing,
- Figure 5: shows a similar view to Figure 1 of a particularly simple, mechanically operated variation,
- Figure 6: shows, in section, a rotational speed regulator included in the machinery according to Figure 5,
- Figure 7: is a schematic diagram showing the function of the mechanical operating system according to Figures 5 and 6.

According to the preferred embodiment, the elevator machinery 2 comprises a screw 4 non-rotatably mounted in an elevator shaft (not shown) and having a center axis 5 and a steep lead angle (20-30°) and a nut 6 with a corresponding lead angle, mounted on the threads of the screw. The nut is rotatably mounted in a housing 8, preferably by means of a two-row angular contact bearing 9. The inner ring of the bearing is pressed onto the outer lateral surface of the nut and is in axial contact with an annular flange on a key 10 for a nut drive gear. The outer ring of the bearing is pressed into a bearing sleeve 12. The bearing transmits axial forces acting from the elevator car and payload on the housing 8 to the nut 6 as well as taking up radial forces on the nut via a drive means fixed in the housing. The nut drive gear 14 cooperates with a drive device 16 comprising a transmission and a three-phase motor 20 controlled via a control unit 18 comprising a frequency converter. By means of the drive device the rotation of the nut is infinitely variable, from standing still to maximum rpm (about 600 rpm).

The transmission comprises suitably, in addition to the nut drive gear 14, a drive gear 22 and drive means 24. Preferred transmission embodiments comprise a cogged belt transmission with drive gears in the form of cogged pulleys 14 and 22, and a drive means preferably comprising two parallel cogged transmission belts 24a,24b. The nut housing 8, the pulley 14, a friction layer 26 and a disengaging device 28, form together a friction brake 30, which, in the rest position of the machinery, prevents rotation of the nut 6 relative to the housing 8. The friction layer is suitably fixed to the flat housing end surface 32 facing the pulley. The opposite flat side 34 of the pulley is brought into contact with the friction layer under the influence of gravity.

The friction brake is hydraulically disengageable by activation of the disengaging device via a hydraulic pump 36, which is controlled, together with the drive device by the common control unit. The disengaging device comprises an annular cylinder 38 and an annular piston 40, which are arranged in telescoping relation to each other. Between the cylinder and the piston there is enclosed an annular chamber 42, which communicates via a feeder channel 41 with the hydraulic pump. The annular chamber is sealed by conventional O-ring seals 43 disposed in the mutually telescoping cylindrical surface of the cylinder and the piston.

A fall-stop nut 44 is disposed on the screw 4 beneath the elevator nut 6, said nut 44 following unloaded the movement of the nut 6 on the screw. The fall-stop nut is in this case disposed at a predetermined distance from the elevator nut, said distance corresponding to the maximum gap which can arise due to wear between the screw and the nut, before the elevator nut rests on the fall-stop nut. The fall-stop nut is driven along with the rotational movement of the elevator nut by means of at least one pin 46, which is fixed in the fall-stop nut and is insertable, parallel to the center axis 5 into a corresponding driver recess 48 in the elevator nut. The axial depth of the recess is adapted to the distance between the nuts. A dust protector sleeve 50 is mounted on the fall-stop nut 44 and overlappingly covers the joint between the nuts, and has a flange 51.

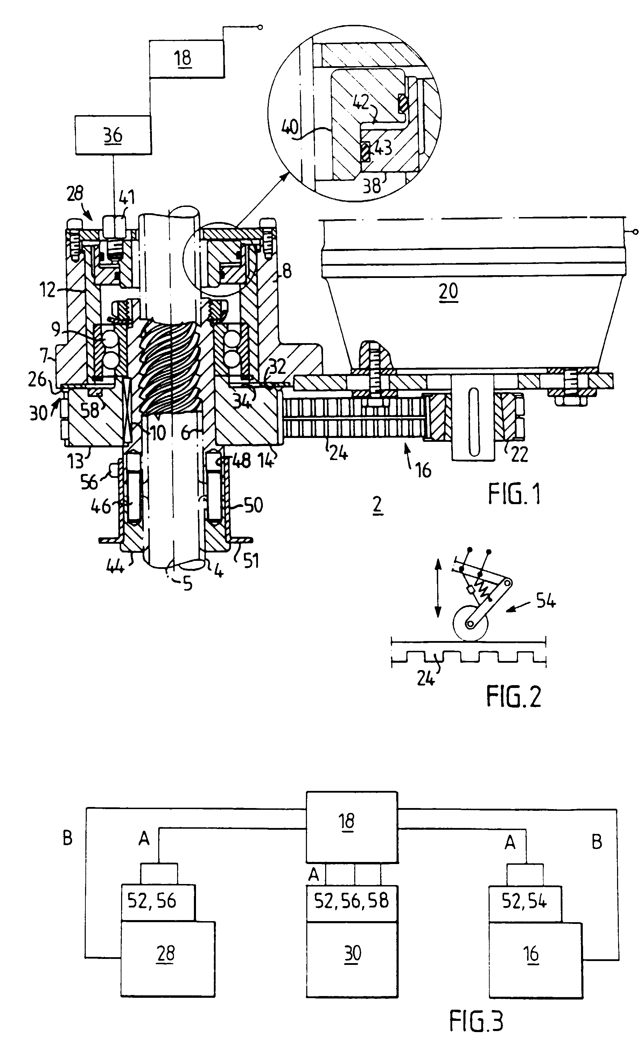

As can be seen in Figures 2 and 3, the control unit 18 receives data values A on the operating state of the machinery via sensor elements 52 which are known per se, and which can be mechanical, hydraulic, electrical, inductive, electromechanical or electro-optical. By two contact sensor elements 54 for example, individual belt monitoring is possible, and a non-contact sensor element 56 provides an indication when the elevator nut has reached a predetermined degree of wear relative to the fall-stop nut. A pulse sensor 58 sees to it that the rpm of the nut does not exceed a predetermined value. Sensed values A are processed by the control unit 18 and are compared with predetermined values stored therein concerning e.g. the state of the belt and/or the current rotational speed of the nut and its degree of wear. Control signals B are then sent to the drive device 16 and the disengaging device 28. It is also possible, in response to these signals, to selectively control the drive device 16 and the disengaging device 28 in conjunction with each other by means of the control unit 18. This means that the electric motor can be started immediately prior to the activation of the disengaging device. The motor will thus provide a certain amount of torque while the friction brake 30 is still engaged and vice versa, to provide a gentle start and stop.

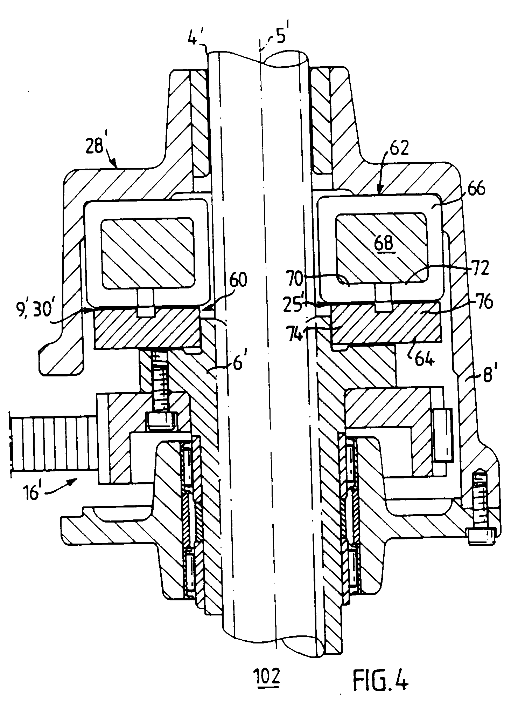

A further embodiment of the elevator machinery is revealed in Figure 4 and is in principle constructed in the same manner as that described above. However, the disengaging device 28' is in this case electromechanically instead of hydraulically operated. The device 28' is in the form of a bearing clutch 60, comprising two annular magnetic elements 62,64 arranged concentrically about the screw axis 5' and which in the rest position of the machinery are in contact with each other. One element is an electromagnet 62, which is enclosed in an annular core 66 and has an annular coil 68. The magnet 62 has concentrically arranged, radially separated annular poles, e.g. a south pole 70 and a north pole 72. The poles face the other magnetic element, which is a permanent magnet 64. The poles 70,72, upon activation and depending on the polarisation of the energizing current, are, relative to the center axis 5', an inner south pole 70 and an outer north pole 72. The permanent magnet 64 has radially separated permanently magnetized poles, a south pole 74 and a north pole 76, opposite the poles of the electromagnet 62. The south poles 70 and 74 and the north poles 72 and 76 repel each other, which causes the electromagnet to be lifted from the permanent magnet and, analogously to the annular cylinder shown in Figure 1, if there is a sufficiently strong activating current, the housing 8' will be lifted together with the equipment including the pay load mounted thereon. Thus, an air gap is formed between the magnets 62 and 64, which permits the permanent magnet 64, which is fixedly joined to the elevator nut 6', to rotate together with the nut, via the drive device 16' with very low friction (the magnetic field) relative to the electromagnet 62 and the housing 8'. The magnets 62 and 64 thus constitute in this case an electromagnetic thrust bearing 9'.

In Figure 4, the annular portions of the magnets, lying in contact with each other in the rest position, extend radially forming a right angle to the center axis of the screw. The contact surface between the portions is a frictional surface 25', which thus also forms a right angle to the screw axis. It is, however, advantageous if these portions are made so that the angle of the frictional surface to the screw axis is not a right angle and thus forms a truncated cone which can be turned upside down. This provides an advantageous self-centering effect in the magnetic bearing.

When the supply of current to the magnet 62 ceases, the major portion of the magnetic field is removed and thus the lifting effect of the magnet, so that the magnets will again come into contact with each other with a contact pressure which, on the one hand, depends on the load via the housing 8' and, on the other hand, on the adhesive force of the permanent magnet relative to the remanence-free core of the electromagnet. Thus, the nut 6' is prevented from rotating relative to the housing 8' and the electromagnet 62. By changing the polarization of the activating current, it is possible to further increase the braking effect, since the contact pressure of the magnets will in this case be amplified by the attractive force between the magnets.

In the described embodiments, by virtue of the fact that the drive device 16,16' and the friction brake 30,30' are designed to be controlled in time with each other, a gentle and even transition is achieved between the braked state and the operating state. Furthermore, an automatic braking effect is achieved if there is a power failure. With a substantially vertically disposed screw 4,4',4", a more powerful braking effect is achieved the greater the load is acting on the machinery, which is a factor which increases security.

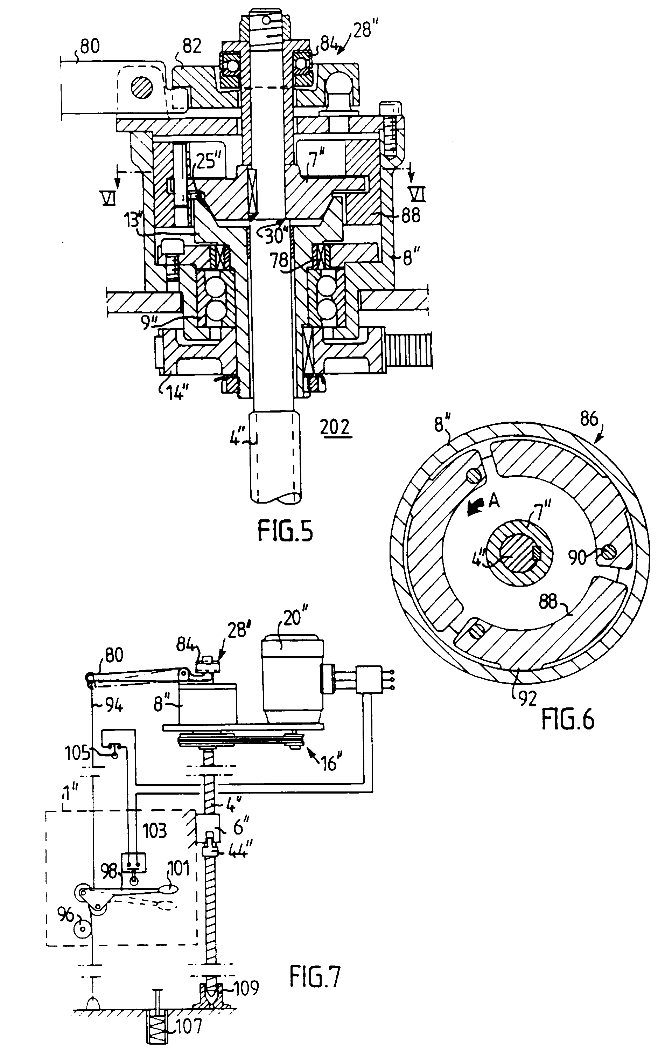

As was mentioned in the introduction, it is also possible to use a nut 6" non-rotatably mounted in an elevator car 1", and instead make the screw 4" rotatable in the elevator shaft (not shown)(Figures 5-7). The screw is mounted in a first braking means which, in the form of a flange-like disc or cone 7", is enclosed in the elevator machinery housing 8". The housing also contains a second braking means, which is in the form of a concave cone 13", corresponding to the shape of the cone 7". The cones are prevented from rotating relative to each other by the frictional force in a friction surface 25" between the cones, as long as the screw is loaded by the elevator car. An advantage of this arrangement is that emergency lowering is easily achieved, by reducing the load on the frictional surface.

According to this embodiment, the housing 8" of the elevator machinery together with a drive device 16", a mechanically operated disengaging device 28" and a friction brake 30" are fixed in the elevator shaft. A particularly simple and inexpensive, vertically oriented elevator machinery, without any sophisticated control system, is achieved by means of the mechanical disengaging device for emergency lowering by virtue of the fact that the concave cone cooperates with a one-way clutch in the form of a free wheel 78. The elevator is operated upwards by means of the motor with the one-way clutch unblocked, while the operation downwards is done through gravity with a locked clutch (arrow A). The main components of the disengaging device are a lever 80, a gimbled pressure plate 82 and a thrust bearing 84. The dimensioning and con-struction of the lever provides a mechanical advantage between the free end of the lever and its end acting against the pressure plate of about 60:1. A mechanically regulated centrifugal brake 86 ensures that the speed of lowering will not exceed a predetermined value. The centrifugal brake 86 includes three brake shoes 88, each being pivotally mounted at one end with an individual pivot pin 90. Each brake shoe has a heel 92 which is suitably coated with a conventional friction layer. The heel is located circumferentially farther from the free end of the brake shoe than from the pivoted end. The disengaging device is easily actuated, e.g. by means of a line 94 fixed to the free end of the lever, which, as needed, e.g. when desending or during a power failure, is tensioned by lateral loading via one or more rotatable pulleys 96 travelling with the elevator car. Two pulleys are fixed to the elevator car, while one of the pulleys is movable relative to the others by means of an operating lever 98, to achieve the desired lateral load on the line. The operating force required on the handle 101 of the lever, in order to, in this manner, unload the frictional surface between the cones, acts parallel to the force of gravity and is, as a rule, less than 10 N at a total load of 400 kg.

The position of the operating lever shown with solid lines in Figure 7 is in its rest position in which the lever is held, for example by means of a spring arrangement (not shown). When the lever is lifted as from this position, it is in its position for operation upwards, in which a switch 103 is activated closing the circuit to the electric motor. When the elevator has reached its desired position, the operating lever is released and it returns to its rest position, the switch breaks the circuit and the elevator stops. The elevator is kept in this position by means of the free wheel and the brake means, which lock the rotation of the screw for descending, relative to the anchoring points in the elevator shaft. If the operating lever for some reason is not returned to its rest position before the elevator car has reached its uppermost position, damage to the elevator machinery can be avoided by an upper limit switch 105. It is located at the uppermost portion of the elevator shaft and breaks the current circuit when the elevator car or a contact means mounted on the same strikes the corresponding means on the limit switch. When descending, the operating lever 98 is depressed from its rest position to the position shown with dashed lines in Figure 7, and the line 94 is tensioned by means of the pulleys 96. The line forces the free end of the lever 80 downwards and its other end lifts, via the pressure plate 82 and the thrust bearing 84, the screw 4" with total load so far that the cone 7" lifts from the cone 13". The screw is then free to rotate due to the force of gravity in the nut and the elevator descends as long as the operating lever is kept in the position shown with dashed lines. The rate of descent is controlled by the centrifugal brake 86. As soon as the lever 98 is allowed to return to its rest position, the elevator stops since the screw with load again rests on the frictional surface 25" between the brake means and the rotation of the screw for descent is blocked by the free wheel 78.

A dampening piston 107 is arranged at the bottom of the shaft and facilitates a gentle braking from the maximum descent rate permitted by the centrifugal brake, and standing still. The lower end of the screw is conical and is guided with a certain amount of play in a guide sleeve 109 provided with a brake cone and anchored in the bottom of the elevator shaft. If, despite the high safety requirements fulfilled by the elevator machinery described above, the screw should come loose above the elevator nut, the conical end of the screw will lie in contact with the brake cone in the guide sleeve 109, thus preventing uncontrolled rotation of the screw.

A security-increasing effect is achieved by virtue of the fact that the screw is enclosed along its entire length below the nut in the channel formed between the elevator shaft and the elevator car. In the channel, the space for horizontal movement of the screw is limited, and therefore the screw can not buckle if a portion of the screw below the nut should be subjected to a compressive load.

If the elevator for some reason during its descent should become stuck in the elevator shaft or descend to the bottom thereof, it is of advantage if the elevator machinery would not continue to attempt to drive the car downwards, on the one hand, to not aggravate the problem which caused the stoppage and, on the other hand, to prevent damage to the machinery or possibly buckling of the screw. According to the invention this is achieved by virtue of the fact that the screw is allowed to rotate if the vertical load changes direction or is reduced to a low value. The screw is therefore releasable by means of a quick release coupling when it is lifted upwards. This variant requires very little space and can be manufactured at low cost.

Finally, it is pointed out that the present invention must not be considered to be limited by the above described special embodiments. Rather, the invention comprises all those embodiments and equivalent solutions which fall within the scope of the following patent claims.

### Reference numerals

- 2: elevator machinery
- 4: screw
- 5: center axis
- 6: nut
- 7: first brake means
- 8: housing
- 9: angular contact bearing (axial and radial bearings)
- 10: key
- 12: bearing sleeve
- 13: second brake means
- 14: first drive gear, nut drive gear
- 16: drive device
- 18: control unit
- 20: electric motor (three phase motor)
- 22: drive gear, motor drive gear
- 24: drive means, double parallel coged belts
- 25: friction surface
- 26: friction layer
- 28: disengaging device
- 30: friction brake
- 32: flat end surface
- 34: flat side surface
- 36: hydraulic pump
- 38: annular cylinder
- 40: annular piston
- 41: feeder channel
- 42: annular chamber
- 43: O-ring
- 44: fall-stop nut
- 46: pin
- 48: driver recess
- 50: dust protector sleeve
- 52: sensor elements
- 54: contact sensor element
- 56: non-contact sensor element
- 58: pulse sensor
- 60: bearing clutch
- 62: electromagnet
- 64: Permanent magnet
- 66: annular core
- 68: annular coil
- 70: electromagnet south pole
- 72: electromagnet north pole
- 74: permanent magnet south pole
- 76: permanent magnet north pole
- 78: free wheel (locked clutch)
- 80: lever
- 82: pressure plate (gimbled)
- 84: thrust bearing
- 86: centrifugal brake
- 88: brake shoe
- 90: pivot pin
- 92: brake heel
- 94: operating line
- 96: pulley
- 101: handle
- 102: elevator machinery (second embodiment)
- 103: switch
- 105: limit switch
- 107: dampening piston
- 109: guide sleeve with brak cone
- 202: elevator machinery (third embodiment)

## Claims

1. Elevator machinery for a screw drive elevator, comprising a preferably trapezoidal threaded screw (4) and, mounted thereon, a nut (6) provided with a corresponding thread as well as a drive device (16), said nut bearing a payload and said drive device having a first gear (14) and at least one drive means (24) connecting the first gear to a second gear (22), which is mounted on the shaft of a drive motor (20), by means of which the nut (6) or the screw (4) is rotatable depending on the regulation of the motor and depending on a friction brake (30), **characterized** in that the lead angle of the screw (4) is greater than 10°, that the friction brake (30) comprises first (7) and second (13) brake means, at least one frictional surface (25) and has a disengaging device (28), that at least one of the brake means (7,13) is non-rotatably connected to either the screw (4) or the nut (6), and that the contact pressure necessary for the braking effect on the braking means is generated by the load acting on the elevator machinery (2).

2. Elevator machinery for a screw drive elevator according to Claim 1, **characterized** in that the brake means (7) and (13), by means of the disengaging device (28), are displaceable relative to each other against the force of the load, between two limit positions along the centerline of the screw, said limit positions defining a rest position and a work position of the machinery (2).

3. Elevator machinery for a screw drive elevator according to Claim 1 or 2, **characterized** in that the nut (6) is rotatably suspended in a housing (8) connected to the drive device (16), said drive device having a first gear (14) surrounding and non-rotatably fixed to the nut, that the first gear is a nut gear (14) and the second gear is a drive gear (22), and that the first brake means (7) is formed of the nut housing (8) and the second brake means (13) is formed of the nut gear (14).

4. Elevator machinery for a screw drive elevator according to Claim 3, **characterized** in that the load in the rest position is borne by the screw (4) via the housing (8), a friction wear layer (26), the nut gear (14) and the nut (6).

5. Elevator machinery for a screw drive elevator according to Claims 2 - 4, **characterized** in that the disengaging device (28) is activated in the work position, whereby the gear (14) is unloaded and a thrust bearing (9) is loaded, and that the load is thereby borne by the screw (4) through the housing (8), the disengaging device (28), a bearing sleeve (12), the thrust bearing (9) and the nut (6).

6. Elevator machinery for a screw drive elevator according to Claim 4 or 5, **characterized** in that the friction brake (30) comprises an annular lateral surface (34) of the nut gear (14) facing the housing (8) and an opposing, annular end surface (32) of the housing (8), said surfaces being brake surfaces, and the wear layer (26) between the surfaces, that the surfaces and the wear layer concentrically surround the screw (4) and, by means of the load acting on the housing (8), when the elevator machinery is in its rest position, are pressed towards each other with the pressure force required for the braking effect.

7. Elevator machinery for a screw drive elevator according to one of the preceding claims, **characterized** in that the disengaging device (28) is hydraulically operated and comprises two telescoping annular elements disposed about the center axis (5) of the screw, an annular cylinder (38) and an annular piston (40), enclosing between them an annular chamber (42) which communicates with a hydraulic pump (36) which is operated in response to control signals from a control unit (18).

8. Elevator machinery for a screw drive elevator according to one of Claims 1 - 6, **characterized** in that the disengaging device (28) is electromagnetically operated.

9. Elevator machinery for a screw drive elevator according to one of Claims 5 - 8, **characterized** in that the disengaging device (28) and the thrust bearing (9) are combined in a bearing clutch (60), which comprises two magnetic elements (62,64) concentrically arranged around the screw axis, an electromagnet (62) formed of an annular core (66) and an annular coil (68), said electromagnet being joined to the housing (8), and a permanent magnet (64) cooperating with the electromagnet, said magnet being joined to the nut (6), that the magnets (62,84) when the electromagnet is not energized, are pressed towards each other and when the electromagnet is energized, depending on the polarization of the energizing current, either press harder towards each other or are placed at a predetermined distance from each other by means of the repulsive forces of the elements, and that the bearing clutch (60) in the two first cases acts as an electromagnetic brake (30), and in the last mentioned case acts as an electromagnetic thrust bearing (9).

10. Elevator machinery for a screw drive elevator according to one of Claims 1 - 6, **characterized** in that the disengaging device (28) is mechanically operated.

11. Elevator machinery for a screw drive elevator according to one of Claims 3 - 10, **characterized** in that the nut (6) is non-rotatably fixed in an elevator car, that the screw (4) is rotatably mounted in the elevator shaft, and that the housing (8), the drive device (16) and the disengaging device (28) are fixed in the elevator shaft.

## Patentansprüche

1. Aufzugsmaschinerie für einen Schraubenantriebsaufzug, umfassend eine bevorzugt trapezoidförmig gewindete Schraube (4), und montiert daran eine Mutter (6), welche bereitgestellt ist mit einem entsprechenden Gewinde, sowie eine Antriebsvorrichtung (16), wobei die Mutter eine Nutzlast trägt und die Antriebsvorrichtung ein erstes Zahnrad (14) und zumindest eine Antriebseinrichtung (24) aufweist, welche das erste Zahnrad mit einem zweiten Zahnrad (22) verbindet, welches an der Welle eines Antriebsmotors (20) montiert ist, mittels welcher die Mutter (6) oder die Schraube (4) drehbar ist, und zwar abhängig von der Steuerung des Motors und abhängig von einer Reibungsbremse (30), dadurch gekennzeichnet, daß der Gewinde-Anschnitts- bzw. -Steigungswinkel der Schraube (4) größer als 10° ist, daß die Reibungsbremse 30 aufweist erste (7) und zweite (13) Bremseinrichtungen, zumindest eine Reibungsfläche (25) und eine Ausrückeinrichtung (28) hat, daß zumindest eine der Bremseinrichtungen (7, 13) nicht drehbar mit entweder der Schraube (4) oder der Mutter (6) verbunden ist, und daß der Kontaktdruck, welcher nötig ist für die Bremswirkung an den Bremseinrichtungen, erzeugt ist durch die Last, welche auf die Aufzugsmaschinerie (2) wirkt.

2. Aufzugsmaschinerie für einen Schraubenantriebsaufzug gemäß Anspruch 1, dadurch gekennzeichnet, daß die Bremseinrichtungen (7) und (13) mittels der Ausrückeinrichtung (28) versetzbar sind relativ zueinander gegen die Kraft der Last, und zwar zwischen zwei Begrenzungspositionen entlang der Mittellinie der Schraube, wobei die Begrenzungspositionen eine Ruheposition und eine Arbeitsposition der Maschinerie (2) definieren.

3. Aufzugsmaschinerie für einen Schraubenantriebsaufzug gemäß Anspruch 1 oder 2, dadurch gekennzeichnet, daß die Mutter (6) drehbar in einem Gehäuse (8) aufgehängt bzw. gelagert ist, welches mit der Antriebsvorrichtung (16) verbunden ist, wobei die Antriebsvorrichtung ein erstes Zahnrad (14) hat, welches die Mutter umgibt, und welches nicht drehbar mit der Mutter verbunden ist, daß das erste Zahnrad ein Mutterzahnrad (14) und das zweite Zahnrad ein Antriebszahnrad (22) ist, und daß die erste Bremseinrichtung (7) aus dem Muttergehäuse (8) und die zweite Bremseinrichtung (13) aus dem Mutterzahnrad (14) gebildet sind.

4. Aufzugsmaschinerie für einen Schraubenantriebsaufzug gemäß Anspruch 3, dadurch gekennzeichnet, daß die Last in der Ruheposition durch die Schraube (4) über das Gehäuse (8), ein Reibungsabnutzungslager (26), das Mutterzahnrad (14) und die Mutter (6) getragen wird.

5. Aufzugsmaschinerie für einen Schraubenantriebsaufzug gemäß den Ansprüchen 2 bis 4, dadurch gekennzeichnet, daß die Ausrückeinrichtung (28) in der Arbeitsposition aktiviert ist, wodurch das Zahnrad (14) entlastet wird und ein Axialdrucklager (9) belastet wird, und daß die Last somit getragen wird durch die Schraube (4), durch das Gehäuse (8), die Ausrückeinrichtung (28), eine Lagerhülse (12), das Axialdrucklager (9) und die Mutter (6).

6. Aufzugsmaschinerie für einen Schraubenantriebsaufzug gemäß Anspruch 4 oder 5, dadurch gekennzeichnet, daß die Reibungsbremse (30) aufweist eine ringförmige Lateralfläche (34) des Mutterzahnrades (14), welche zu dem Gehäuse (8) zeigt, und eine gegenüberliegende ringförmige Endfläche (32) des Gehäuses (8), wobei die Flächen Bremsflächen sind, und die Abnutzungslage (26) zwischen den Flächen, daß die Flächen und die Abnutzungslage konzentrisch die Schraube (4) umgeben, und welche zueinander druckbeaufschlagt werden mit der Druckkraft, welche für die Bremswirkung erforderlich ist mittels der Last, welche auf das Gehäuse (8) wirkt, wenn die Aufzugsmaschinerie in ihrer Ruheposition ist.

7. Aufzugsmaschinerie für einen Schraubenantriebsaufzug gemäß einem der vorangegangenen Ansprüche, dadurch gekennzeichnet, daß die Ausrückeinrichtung (28) hydraulisch betätigt ist und aufweist zwei teleskopartige ringförmige Elemente, welche bezüglich der Mittelachse (5) der Schraube angeordnet sind, einen ringförmigen Zylinder (38) und einen ringförmigen Kolben (40), welche zwischen sich eine ringförmige Kammer (42) umschließen, welche mit der hydraulischen Pumpe (36) verbunden ist, welche betrieben wird, ansprechend auf Steuersignale von einer Steuereinheit (18).

8. Aufzugsmaschinerie für einen Schraubenantriebsaufzug gemäß einem der Ansprüche 1 bis 6, dadurch gekennzeichnet, daß die Ausrückeinrichtung (28) elektromagnetisch betätigt ist.

9. Aufzugsmaschinerie für einen Schraubenantriebsaufzug gemäß einem der Ansprüche 5 bis 8, dadurch gekennzeichnet, daß die Ausrückeinrichtung (28) und das Axialdrucklager (9) kombiniert sind in einer Lagerkupplung (60), welche aufweist zwei magnetische Elemente (62, 64), welche konzentrisch um die Schraubenachse angeordnet sind, einen Elektromagnet (62), welcher aus einem ringförmigen Kern (66) und einer ringförmigen Spule (68) gebildet ist, wobei der Elektromagnet mit dem Gehäuse (8) verbunden ist, und einen Permanentmagneten (64), welcher mit dem Elektromagneten zusammenwirkt, wobei der Magnet mit der Mutter (6) verbunden ist, daß die Magnete (62, 84), wenn der Elektromagnet nicht stromversorgt ist, zueinander druckbeaufschlagt sind, und wenn der Elektromagnet stromdurchflossen ist, abhängig von der Polarisierung des energiezuführenden Stromes entweder stärker zueinander druckbeaufschlagt oder unter einem vorbestimmten Abstand voneinander mittels der abstoßenden Kräfte der Elemente angeordnet sind, und daß die Lagerkupplung (60) in den zwei ersten Fällen als eine elektromagnetische Bremse (30) und im zuletzt genannten Fall als ein elektromagnetisches Axialdrucklager (9) wirkt.

10. Aufzugsmaschinerie für einen Schraubenantriebsaufzug gemäß einem der Ansprüche 1 bis 6, dadurch gekennzeichnet, daß die Ausrückeinrichtung (28) mechanisch betätigt ist.

11. Aufzugsmaschinerie für einen Schraubenantriebsaufzug gemäß einem der Ansprüche 3 bis 10, dadurch gekennzeichnet, daß die Mutter (6) nicht drehbar an einer Aufzugskabine befestigt ist, daß die Schraube (4) drehbar an der Aufzugswelle montiert ist, und daß das Gehäuse (8), die Antriebseinrichtung (16) und die Ausrückeinrichtung (28) an der Aufzugswelle befestigt sind.

## Revendications

1. Machinerie d'ascenseur pour un ascenseur à vis de rappel, comportant une vis (4) filetée de préférence trapézoïdale, et, monté sur celle-ci, un écrou (6) muni d'un taraudage correspondant ainsi qu'un dispositif (16) d'entraînement, l'écrou supportant une charge utile et le dispositif d'entraînement ayant un premier engrenage (14) et au moins un moyen (24) d'entraînement reliant le premier engrenage à un second engrenage (22), qui est monté sur l'arbre d'un moteur (20) d'entraînement, au moyen duquel l'écrou (6) ou la vis (4) peut tourner en fonction de la régulation du moteur et en fonction d'un frein (30) à friction, caractérisée en ce que l'angle d'attaque de la vis (4) est supérieur à 10°, en ce que le frein (30) de friction comporte des premier (7) et second (13) moyens de frein, au moins une surface (25) de friction et comporte un dispositif (28) de désengagement, en ce que au moins l'un des moyens (7,13) de frein est relié de manière à ne pas pouvoir tourner soit à la vis (4), soit à l'écrou (6), et en ce que la pression de contact nécessaire pour l'effet de frein sur les moyens de frein est produite par la charge agissant sur la machinerie (2) d'ascenseur.

2. Machinerie d'ascenseur pour un ascenseur à vis de rappel conformément à la revendication 1, caractérisée en ce que les moyens (7) et (13) de frein, au moyen du dispositif (28) de désengagement, peuvent être déplacés l'un par rapport à l'autre contre la force de la charge, entre deux positions limites le long de la ligne centrale de la vis, ces positions limites définissant une position de repos et une position de travail de la machinerie (2).

3. Machinerie d'ascenseur pour un ascenseur à vis de rappel conformément à la revendication 1 ou 2, caractérisée en ce que l'écrou (6) peut être tourné suspendu dans un boîtier (8) relié au dispositif (16) d'entraînement, ce dispositif d'entraînement comportant un premier engrenage (14) entourant l'écrou et fixé à celui-ci de manière à ne pas pouvoir tourner, en ce que le premier engrenage est un engrenage (14) d'écrou et le second engrenage est un engrenage (22) d'entraînement, et en ce que les premiers moyens (7) de frein sont formés du boîtier (8) d'écrou et les seconds moyens (13) de frein sont formés de l'engrenage (14) d'écrou.

4. Machinerie d'ascenseur pour un ascenseur à vis de rappel suivant la revendication 3, caractérisée en ce que la charge à la position de repos est supportée par la vis (4) par l'intermédiaire du boîtier (8), d'une couche (26) d'usure de friction, de l'engrenage (14) d'écrou et de l'écrou (6).

5. Machinerie d'ascenseur pour un ascenseur à vis de rappel suivant la revendication 2 à 4, caractérisée en ce que le dispositif (28) de désengagement est activé dans la position de travail, et l'engrenage (14) étant alors déchargé et un palier (9) de butée étant chargé, et en ce que la charge est ainsi supportée par la vis (4) par l'intermédiaire du boîtier (8), du dispositif (28) de désengagement, d'une gaine (12) de palier, du palier (9) de butée et de l'écrou (6).

6. Machinerie d'ascenseur pour un ascenseur à vis de rappel suivant la revendication 4 ou 5, caractérisée en ce que le frein (30) de friction comporte une surface (34) latérale annulaire de l'engrenage (14) d'écrou qui fait face au boîtier (8) et une surface (32) d'extrémité annulaire opposée du boîtier (8), ces surfaces formant des surfaces de frein, et la couche (26) d'usure entre les surfaces, en ce que les surfaces et la couche d'usure entourent concentriquement la vis (4) et, au moyen de la charge agissant sur le boîtier (8), lorsque la machinerie d'ascenseur est dans sa position de repos, sont pressés l'une vers l'autre avec la force de pression nécessaire pour l'effet de freinage.

7. Machinerie d'ascenseur pour un ascenseur à vis de rappel suivant l'une des revendications précédentes, caractérisée en ce que le dispositif (28) de désengagement est mis en fonctionnement hydrauliquement et comporte deux éléments annulaires télescopiques disposés au voisinage de l'axe (5) central de la vis, un cylindre (38) annulaire et un piston (40) annulaire, formant entre eux une chambre (42) annulaire qui communique avec une pompe (36) hydraulique qui est mise en fonctionnement en réponse à des signaux de commande provenant d'une unité (18) de commande.

8. Machinerie d'ascenseur pour un ascenseur à vis de rappel suivant l'une des revendications 1 à 6, caractérisée en ce que le dispositif (28) de désengagement est mis en fonctionnement électromagnétiquement.

9. Machinerie d'ascenseur pour un ascenseur à vis de rappel suivant l'une des revendications 5 à 8, caractérisée en ce que le dispositif (28) de désengagement et le palier (9) de butée sont combinés pour former un embrayage (60) de palier, qui comporte deux éléments (62, 64) magnétiques disposés concentriquement autour de l'axe de la vis, un électro-aimant (62) formé d'un noyau (66) annulaire et d'une bobine (68) annulaire, cet électro-aimant étant joint au boîtier (8) et un aimant (64) permanent coopérant avec l'électro-aimant, cet aimant étant joint à l'écrou (6), en ce que les aimants (62, 84), lorsque l'électro-aimant n'est pas activé, sont poussés l'un vers l'autre et, lorsque l'électro-aimant est activé, en fonction de la polarisation du courant d'activation, soit poussés plus fortement l'un vers l'autre, soit disposés à une distance prédéterminée l'un de l'autre au moyen des forces de répulsion des éléments, et en ce que l'embrayage (60) de poussée dans les deux premiers cas agit en tant que frein (30) électromagnétique et dans le dernier cas mentionné agit en tant que palier (9) de butée électromagnétique.

10. Machinerie d'ascenseur pour un ascenseur à vis de rappel suivant l'une des revendications 1 à 6, caractérisée en ce que le dispositif (28) de désengagement est mis en fonctionnement de manière mécanique.

11. Machinerie d'ascenseur pour un ascenseur à vis de rappel conforme à l'une des revendications 3 à 10, caractérisée en ce que l'écrou (6) est fixé de manière à ne pas pouvoir tourner dans une cage d'ascenseur, en ce que la vis (4) est montée de manière à pouvoir tourner dans l'arbre d'ascenseur, et en ce que le boîtier (8), le dispositif (16) d'entraînement et le dispositif (28) de désengagement sont fixés dan l'arbre d'ascenseur.
